# EUROPÄISCHE PATENTSCHRIFT

(11) **EP 4 480 022 B1**
(45) Veröffentlichungstag und Bekanntmachung des Hinweises auf die Patenterteilung: **28.01.2026**
(21) Anmeldenummer: 23704318.7
(22) Anmeldetag: 08.02.2023
(51) Int. Cl.: H01M 8/008

(54) **VERFAHREN ZUM STEUERN EINER ANTRIEBSEINHEIT UND/ODER EINER TRENNUNTERSTÜTZUNGSEINHEIT ZUM TRENNEN VON ZELLLAGEN EINES ZELLSTAPELS EINER BRENNSTOFFZELLE**
METHOD FOR CONTROLLING A DRIVE UNIT AND/OR A SEPARATION SUPPORT UNIT FOR SEPARATING CELL LAYERS OF A CELL STACK OF A FUEL CELL
PROCÉDÉ DE COMMANDE D'UNE UNITÉ D'ENTRAÎNEMENT ET/OU D'UNE UNITÉ D'AIDE À LA SÉPARATION DESTINÉE À SÉPARER DES COUCHES DE CELLULES D'UN EMPILEMENT DE CELLULES D'UNE PILE À COMBUSTIBLE

(30) Priorität: 16.02.2022 DE 102022201567
(43) Veröffentlichungstag der Anmeldung: 25.12.2024
(73) Patentinhaber: Robert Bosch GmbH, 70442 Stuttgart (DE)
(72) Erfinder: BERGER, Martin, 74385 Pleidelsheim (DE); DIESSNER, Christian, 75417 Muehlacker-Muehlhausen (DE)
(86) Internationale Anmeldenummer: PCT/EP2023/053075
(87) Internationale Veröffentlichungsnummer: WO 2023/156268

(56) Entgegenhaltungen:
- US-A1- 2007 134 536
- US-A1- 2007 151 088
- US-A1- 2021 050 634

## Beschreibung

### Stand der Technik

Die Erfindung betrifft ein Verfahren zum Steuern einer Antriebseinheit und/oder einer Trennunterstützungseinheit zum Trennen von aneinanderhaftenden Zelllagen eines Zellstapels, insbesondere einer elektrochemischen Zelle, eine entsprechende Steuereinheit sowie eine Zelllagentrennvorrichtung zum Trennen von aneinanderhaftenden Zelllagen eines Zellstapels, insbesondere einer elektrochemischen Zelle.

Beim Recycling von unterschiedlichsten Produkten wie bspw. Verpackungen, Elektroschrott, etc. werden die Produkte typischerweise "undefiniert" zerkleinert, d.h. geschreddert oder gemahlen. Danach werden die werthaltigen von den weniger werthaltigen Fraktionen getrennt und weiterverarbeitet.

Brennstoffzellenstacks bestehen aus Membran-Elektroden-Einheiten (MEA), welche Membranen, Gasdiffusionslagen (GDL) und Dichtungsrahmen umfassen, sowie Bipolarplatten (BPP), welche in der Regel aus Stahlblech oder gefrästen Graphitplatten bestehen. Diese beiden Bauteile - MEA und BPP - werden abwechselnd übereinandergestapelt. Ein typischer Brennstoffzellenstack im Automotive-Bereich mit ca. 100 kW Leistung besteht aus ca. 350 bis 450 BPPs und ebenso vielen MEAs. Je nach Produktdesign sind die Bauteile durch die Dichtungen oder die GDL mit zunehmender Laufleistung auch zunehmend stark miteinander verklebt.

Beim Recycling von Brennstoffzellenstacks wird gemäß dem einleitend beschriebenen Verfahren vorgegangen, welches gleich mehrere Nachteile mit sich bringt. Zunächst sind die MEA von den BPP zwecks Recycling bzw.

Remanufacturing aufgrund der zunehmenden Verklebung/Korrosion schwer voneinander zu trennen. Dies führt dazu, dass sehr werthaltige, weil Platinhaltige, Partikel oder Stäube an den Bipolarplatten-Fragmenten haften bleiben, somit mit ihnen aussortiert werden und damit unwiederbringbar verloren gehen. Ein Remanufacturing z.B. von Bipolarplatten ist aufgrund der zerstörenden Zerkleinerung in der Regel ausgeschlossen. Des Weiteren birgt ein undefinierter Zerlegeprozess für das Recycling die Gefahr hoher Verluste werthaltiger Materialien.

US 2007/134536 A1 beschreibt ein Verfahren zum Zerlegen eines Brennstoffzellenstapels mittels mittels einer Trenneinheit.

### Sollte im heutigen Stack-Musterbau (mit sehr geringen Produktionszahlen)

Nacharbeit erforderlich werden, so wird händisch mit einer Art Messer oder einem Spatel zwischen zwei Zelllagen gefahren und die klebende Dichtung vorsichtig gelöst. Dieses manuelle Verfahren ist sehr ineffizient, da es zum einen nur sehr lokal wirkt, da das Werkzeug feinfühlig um den gesamten Stackumfang herumgeführt werden muss (grob 0,75-1 m Strecke) und zum anderen relativ lange dauert und teilweise einen hohen Werkzeugverschleiß mit sich bringt.

### Offenbarung der Erfindung

Gegenstand der vorliegenden Erfindung ist ein Verfahren zum Steuern einer Antriebseinheit und/oder einer Trennunterstützungseinheit zum Trennen von aneinanderhaftenden Zelllagen eines in einer Aufnahmeeinheit aufgenommenen Zellstapels, insbesondere einer elektrochemischen Zelle, mittels einer Trenneinheit mit den Schritten:
- Führen der Trenneinheit zwischen die aneinanderhaftenden Zelllagen des Zellstapels zum Trennen der Zelllagen mittels der Antriebseinheit;
- Erfassen zumindest einer beim Schritt des Führens aufgrund eines Einwirkens der Trenneinheit auf den Zellstapel sich ändernden physikalischen Größe mittels einer Sensoreinheit; und
- Steuern der Antriebseinheit und/oder einer Trennunterstützungseinheit in Abhängigkeit von der zumindest einen erfassten physikalischen Größe mittels einer Steuereinheit, um den Trennvorgang zu optimieren.

Gegenstand der vorliegenden Erfindung ist ferner eine Steuereinheit, die eingerichtet ist, folgende Schritte auszuführen:
- Empfangen von Sensordaten einer Sensoreinheit, wobei die Sensordaten zumindest eine bei einem Führen einer Trenneinheit mittels einer Antriebseinheit zwischen aneinanderhaftende Zelllagen eines Zellstapels, insbesondere einer elektrochemischen Zelle, aufgrund eines Einwirkens einer Trenneinheit auf den Zellstapel sich ändernde physikalische Größe repräsentieren; und
- Ausgeben eines Steuersignal an die Antriebseinheit und/oder eine Trennunterstützungseinheit in Abhängigkeit von den empfangenen Sensordaten, um den Trennvorgang zu optimieren.

Gegenstand der vorliegenden Erfindung ist außerdem eine Zelllagentrennvorrichtung zum Trennen von aneinanderhaftenden Zelllagen eines in einer Aufnahmeeinheit aufgenommenen Zellstapels, insbesondere einer elektrochemischen Zelle, mit
- zumindest einer Trenneinheit zum Trennen der Zelllagen;
- einer Antriebseinheit zum Führen der zumindest einen Trenneinheit zwischen die aneinanderhaftenden Zelllagen des Zellstapels zum Trennen der Zelllagen;
- gegebenenfalls einer Trennunterstützungseinheit zum Einbringen von Ultraschallschwingungen und/oder eines Schmiermediums und/oder Wärme oder Kälte in den Zellstapel;
- einer Sensoreinheit zum Erfassen zumindest einer beim Schritt des Führens aufgrund eines Einwirkens der Trenneinheit auf den Zellstapel sich ändernden physikalischen Größe; und
- einer vorhergehend beschriebenen Steuereinheit.

Das erfindungsgemäße Verfahren ermöglicht einen automatisierten und optimierten Trennvorgang von aneinanderhaftenden Zelllagen eines Zellstapels, wobei insbesondere Beschädigungsrisiko der Trenneinheit und/oder des Zellstapels reduziert wird. Hierdurch können der Demontagevorgang für ein Recycling bzw. Remanufacturing im Hinblick auf Taktzeit, Robustheit, Werkzeughaltbarkeit und/oder Kosten sowie Verluste werthaltiger Elemente und die Wiederverwertbarkeit der MEAs und BPPs optimiert und damit ein einfaches, schnelles und effizientes Trennverfahren bereitgestellt werden.

Dies wird insbesondere dadurch erzielt, dass das Führen der Trenneinheit und/oder eine Trennunterstützung in Abhängigkeit von einer erfassten physikalischen Größe und somit Messgrößen-abhängig gesteuert wird/werden, sodass unmittelbar und bedarfsgerecht auf geometrische Fertigungstoleranzen des Zellstapels, Beschädigungen, wie bspw. verbogene Ecken, korrodierte Stellen, etc. reagiert werden kann.

Eine elektrochemische Zelle umfasst im Rahmen der vorliegenden Erfindung insbesondere eine Brennstoffzelle und/oder eine Elektrolysezelle und/oder eine Batteriezelle.

Das Verfahren ist somit insbesondere zum Trennen von aneinanderhaftenden Zelllagen eines Brennstoffzellen-Zellstapels und/oder eines Elektrolyseur-Zellstapels und/oder eines Batteriezellen-Zellstapels eingerichtet bzw. gedacht. Es sei jedoch angemerkt, dass das Verfahren auch auf Zellstapel eines Kühlers oder Wärmetauschers anwendbar ist, ohne dabei den Rahmen der vorliegenden Erfindung zu verlassen.

Eine Zelllage des Zellstapels kann eine Membran-Elektroden-Einheit (MEA) oder eine Bipolarplatte (BPP) umfassen oder daraus bestehen. Demnach kann der Zellstapel bspw. 700 bis 1000 Zelllagen umfassend 350 bis 500 BPPs und 350 bis 500 MEAs aufweisen.

Die Aufnahmeeinheit kann bspw. als Arbeitstisch oder Arbeitsplatte ausgebildet sein. Die Aufnahmeeinheit kann höhenverstellbar ausgebildet sein.

Die Trenneinheit ist ausgebildet und dimensioniert, um zwischen die zu trennenden aneinanderhaftenden Zelllagen entlang einer bestimmungsgemäßen Führrichtung einführbar zu sein und die Zelllagen zu trennen. Die bestimmungsgemäße Führrichtung verläuft bevorzugt im Wesentlichen parallel zu der Ebene der zu trennenden Zelllagen. Bevorzugt ist eine Vielzahl von, insbesondere gleich ausgebildeten Trenneinheiten vorgesehen, welche gleichzeitig in verschiedene aneinanderhaftenden Zelllagen führbar sind.

Die Trenneinheit kann an einer Halteeinheit angeordnet sein, welche je nach Ausführungsform stabförmig, plattenförmig oder rahmenförmig ausgebildet sein kann. Bei einer Vielzahl von Trenneinheiten kann, können diese an der Halteeinheit zueinander beabstandet entlang einer Anordnungsrichtung verteilt angeordnet sein. Die Anordnungsrichtung verläuft hierbei bevorzugt quer bzw. senkrecht zu der Ebene der zu trennenden Zelllagen. Die Anzahl der Trenneinheiten und/oder der Abstand zwischen den Trenneinheiten kann an den Zellstapel und ggf. die jeweiligen Fertigungstoleranzen und geometrischen Bauteiltoleranzen angepasst sein. Die Anzahl der Trenneinheiten kann bspw. in einem Bereich von größer oder gleich 5 bis kleiner oder gleich 30 Trenneinheiten liegen. Ist bspw. die Dicke der BBPs und der Abstand zwischen den BBP recht präzise, so kann die Anzahl der Trenneinheiten im oberen Bereich gewählt werden. Der Abstand zwischen den Trenneinheiten liegt bevorzugt in einem Bereich von größer oder gleich 0,3 mm bis kleiner oder gleich 0,8 mm, weiter bevorzugt in einem Bereich von größer oder gleich 0,4 mm bis kleiner oder gleich 0,6 mm.

Der Abstand zwischen den Trenneinheiten kann fixiert und unveränderbar sein. Es ist jedoch vorteilhaft, wenn der Abstand zwischen den Trenneinheiten einstellbar ist. Hierbei ist es vorteilhaft, wenn zum Einstellen des Abstands die Trenneinheiten an der Halteeinheit entlang der Anordnungsrichtung linear bewegbar, insbesondere schwimmend oder federnd gelagert sind, und/oder drehbar um eine, insbesondere quer zu der Anordnungsrichtung und der bestimmungsgemäßen Führrichtung weisenden Drehrichtung federnd gelagert sind. Durch diese Maßnahme kann die Zelllagentrennvorrichtung auf sehr einfache Art und Weise an den Zellstapel angepasst sowie Fertigungstoleranzen und geometrischen Bauteiltoleranzen angepasst werden. Dies führt wiederum dazu, dass die Anzahl der Trenneinheiten maximiert werden kann, sodass mehr Zelllagen oder idealerweise alle Zelllagen des Zellstapels in einem einzigen Arbeitsschritt, d.h. durch einen einzigen Schritt des Führens der Trenneinheiten voneinander getrennt werden können, was die Zerlegedauer bzw. Demontagedauer des Zellstapels entsprechend weiter verkürzt.

Hierbei ist die Trenneinheit zum Trennen der Zelllagen bevorzugt keilförmig und/oder spitzförmig und in der bestimmungsgemäßen Führrichtung spitz zulaufend ausgebildet. Alternativ oder zusätzlich ist die Trenneinheit zum Trennen der Zelllagen bevorzugt entlang einer Spreizrichtung spreizbar ausgebildet und weist insbesondere jeweils einen entlang der Spreizrichtung spreizbaren Trennschenkel auf. D.h., mit anderen Worten, dass die Trenneinheit zwei Trennschenkel aufweisen kann, wobei ein Trennschenkel fixiert und der andere Trennschenkel von diesem wegbewegbar und damit spreizbar ausgebildet ist. Die Spreizrichtung verläuft bevorzugt quer bzw. senkrecht zu der Ebene der zu trennenden Zelllagen.

Alternativ ist es vorteilhaft, wenn die Trenneinheit zum Trennen der Zelllagen drahtförmig oder faserförmig ausgebildet ist, und insbesondere als zu einer Zelllagenebene der Zelllagen parallel ausgerichteter Draht oder Faden/Schnur/Garn ausgebildet ist. Hierbei ist es insbesondere vorteilhaft, wenn die Halteinheit derart ausgebildet und die Trenneinheit derart angeordnet und ausgebildet ist, dass sie zum Trennen der Zelllagen in der Führrichtung von einer Seite des Zellstapels bis zu einer gegenüberliegenden Seite des Zellstapels führbar ist. D.h., mit anderen Worten, dass bspw. ein parallel gespannter Draht oder Faden in einer rahmenförmigen Halteeinheit angeordnet sein kann, welcher sich beim Einführen in den Zellstapel in den Zwischenraum der zu trennenden Zelllagen einfädelt.

Die Trenneinheit wird mittels einer entsprechend ausgebildeten Antriebseinheit zwischen die aneinanderhaftenden Zelllagen des Zellstapels geführt, um die Zelllagen zu trennen. Der Begriff "führen" umfasst im Rahmen der vorliegenden Erfindung unter anderem
- eine Eintauchphase, d.h. ein Eintauchen bzw. Einführen der Trenneinheit in den Zellstapel;
   und
- eine Bewegungsphase, d.h. ein Durchführen bzw. Hindurchführen der Trenneinheit durch den Zellstapel;
   aber auch
- eine Spreizphase, d.h. ein Spreizen bzw. eine Bewegung der Trenneinheit in Stapelrichtung im Zellstapel.

Die Antriebseinheit kann hierbei einen translatorisch/linear bewegbar gelagerten bzw. schienengeführten Träger aufweisen, an dem die Trenneinheit oder die Halteinheit angeordnet ist. Der Träger kann höhenverstellbar ausgebildet sein.

Mittels einer entsprechend ausgebildeten Sensoreinheit wird zumindest eine physikalische Größe erfasst. Bei der physikalischen Größe handelt es sich um eine Größe, welche sich beim Schritt des Führens aufgrund eines Einwirkens der Trenneinheit auf den Zellstapel ändert. Die die zumindest eine physikalische Größe ist hierbei bevorzugt der Trenneinheit und/oder dem Zellstapel und/oder der Aufnahmeeinheit zugeordnet. Hierbei ist die physikalische Größe bevorzugt eine Eigenschaft und/oder eine Zustandsgröße und/oder eine Wirkgröße, welche auf die Trenneinheit und/oder den Zellstapel und/oder die Aufnahmeeinheit wirkt. Demnach kann die zumindest eine physikalische Größe bevorzugt ausgewählt sein aus der Gruppe bestehend aus: Kraft, Frequenz, Länge, Geschwindigkeit, elektrischer Widerstand, oder Ableitungen daraus.

Hierbei umfasst die physikalische Größe bevorzugt
- eine Kraft bzw. Gegenkraft, insbesondere einen Kraftbetrag und/oder eine Kraftrichtung, welche auf die Trenneinheit und/oder den Zellstapel und/oder die Aufnahmeeinheit wirkt; und/oder
- eine Frequenz, insbesondere eine Schwingungsfrequenz und/oder ein Schwingungsfrequenzspektrum der Trenneinheit und/oder des Zellstapels und/oder der Aufnahmeeinheit; und/oder
- eine Länge, insbesondere eine Verformung, der Trenneinheit und/oder des Zellstapels; und/oder
- eine Geschwindigkeit, insbesondere einen Geschwindigkeitsverlauf der Trenneinheit; und/oder
- einen elektrischen Widerstand, insbesondere einen elektrischen Durchgangswiderstand und/oder eine Impedanz des Zellstapels in Stapelrichtung.

Bevorzugt wird die zumindest eine physikalische Größe an der Trenneinheit und/oder dem Zellstapel und/oder Aufnahmeeinheit erfasst. Die Erfassung der physikalischen Größe erfolgt bevorzugt mittels einer optischen Sensoreinheit, kann jedoch je nach physikalischer Größe auch auf andere dem Fachmann bekannte Möglichkeiten erfasst werden.

Die Kraft bzw. Gegenkraft kann bspw. unmittelbar an der Trenneinheit selbst oder der Antriebseinheit erfasst werden. Die Gegenkraft kann jedoch auch mittelbar an dem Zellstapel erfasst werden, wobei bspw. aufgrund einer Verbiegung und damit bei bekannter Geometrie und bekanntem Material des verbogenen/belasteten Teils Rückschlüsse auf die Gegenkraft gezogen werden können. Hierbei sei angemerkt, dass wenn die Trenneinheit als Draht oder Schnur ausgebildet ist, die erfasste Kraft bzw. Gegenkraft auch die Drahtspannung bzw. Schnurspannung sein kann, ohne den Rahmen der vorliegenden Erfindung zu verlassen.

Die Schwingungsfrequenz kann bspw. durch optische Erfassung von Oberflächenschwingungen an der Trenneinheit und/oder dem Zellstapel und/oder der Aufnahmeeinheit ermittelt werden.

Die Erfassung der Verbiegung kann bspw. mittels Dehnungsmessstreifen (DMS) an dem Zellstapel und/oder der Trenneinheit (bspw. wenn diese als Draht oder Schnur ausgebildet ist) oder mittels einer optischen Erfassung der Zellstapelgeometrie und/oder der Trenneinheitgeometrie erfolgen. Hierbei kann die Erfassung bspw. mittels einem statischen oder mit der Trenneinheit mitfahrendem Laser-Entfernungsmesser oder einem mechanischen (taktilen) Taster, welcher misst, ob und wie sehr sich die oberste Zelllage nach oben bewegt durchgeführt werden.

Der Geschwindigkeitsverlauf kann bspw. mittels optischer Erfassung oder Wegmessung ermittelt werden, um eine Gleichmäßigkeit der Vorwärtsbewegung und ggf. "Rucken" der Trenneinheit zu bestimmen.

Der Durchgangswiderstand und/oder eine Impedanz des Zellstapels in Stapelrichtung kann bspw. am gesamten Zellstapel oder an einem Abschnitt des Zellstapels erfasst bzw. ermittelt werden. Dieser kann bspw. Aufschluss darüber geben, ob sich die oberste Zelllage gelöst hat, da dies eine Veränderung des elektrischen Widerstands zu Folge hat.

Die physikalische Größe wird bevorzugt
- bei einer Eintauchphase des Führens der Trenneinheit in den Zellstapel; und/oder
- während einer Bewegungsphase des Führens der Trenneinheit durch den Zellstapel; und/oder
- während einer Spreizphase des Führens der Trenneinheit im Zellstapel ermittelt.

Hierbei kann die jeweilige Phase bspw. mittels der Sensoreinheit ermittelt werden, um die Antriebseinheit und/oder die Trennunterstützungseinheit ferner in Abhängigkeit von der jeweiligen Phase des Führens zu steuern.

Demnach kann die physikalische Größe bspw. eine Kraft sein, welche beim Eintauchen/Einführen der Trenneinheit in den Zellstapel entgegen der bestimmungsgemäßen Führrichtung wirkt bzw. eine Spannung sein, welche beim Eintauchen/Einführen der Trenneinheit in den Zellstapel auf den Draht oder die Schnur wirkt. Analog kann bspw. das Schwingungsfrequenzspektrum ein Spektrum einer Schwingung sein, welche beim Eintauchen/Einführen der Trenneinheit in den Zellstapel entsteht. Hierdurch kann insbesondere eine falsche oder ungünstige Einführposition der Trenneinheit am Zellstapel ermittelt und rechtzeitig korrigiert werden.

Die Gegenkraft kann auch eine Kraft sein, welche beim Bewegen der Trenneinheit innerhalb des Zellstapels entgegen der bestimmungsgemäßen Führrichtung wirkt bzw. eine Spannung sein, welche beim Bewegen der Trenneinheit innerhalb des Zellstapels auf den Draht oder die Schnur wirkt. Analog kann das Schwingungsfrequenzspektrum ein Spektrum einer Schwingung sein, welche während einer Bewegung der Trenneinheit innerhalb des Zellstapels entsteht.

Die Gegenkraft kann auch eine Kraft sein, welche beim Spreizen der Trenneinheit innerhalb des Zellstapels entgegen der Spreizrichtung der spreizbar ausgebildeten Trenneinheiten wirkt. Analog kann das Schwingungsfrequenzspektrum ein Spektrum einer Schwingung sein, welche beim Spreizen der Trenneinheit innerhalb des Zellstapels entsteht.

Mittels einer Steuereinheit wird/werden dann in Abhängigkeit von der erfassten physikalischen Größe die Antriebseinheit und/oder eine Trennunterstützungseinheit gesteuert, um den Trennvorgang zu optimieren, insbesondere eine Trenneffektivität zu optimieren und/oder ein Beschädigungsrisiko der Trenneinheit und/oder des Zellstapels zu reduzieren.

Der Begriff "steuern" umfasst im Rahmen der vorliegenden Erfindung sowohl ein Ansteuern als auch ein Regeln der Einheiten.

Hierbei wird/werden die Antriebseinheit und/oder die Trennunterstützungseinheit bevorzugt ferner in Abhängigkeit von einer Relativposition der Trenneinheit zu dem Zellstapel gesteuert.

Bevorzugt wird/werden mittels der Antriebseinheit eine Bewegungsgeschwindigkeit und/oder eine Bewegungsrichtung und/oder eine Orientierung der Trenneinheit eingestellt.

Vorteilhafterweise wird/werden mittels der Trennunterstützungseinheit Ultraschallschwingungen und/oder ein Schmiermedium und/oder Wärme oder Kälte in den Zellstapel eingebracht, um den Trennvorgang zu optimieren, insbesondere die Trenneffektivität zu optimieren und/oder das Beschädigungsrisiko der Trenneinheit und/oder des Zellstapels zu reduzieren.

Es ist vorteilhaft, wenn im Schritt des Steuerns die Antriebseinheit und/oder die Trennunterstützungseinheit ferner in Abhängigkeit von einer Eigenschaft der Trenneinheit gesteuert wird/werden. Hierbei ist die Eigenschaft der Trenneinheit bevorzugt ausgewählt aus der Gruppe bestehend aus: Art, Größe, Form, Material.

Außerdem ist es vorteilhaft, wenn im Schritt des Steuerns die Antriebseinheit und/oder die Trennunterstützungseinheit ferner in Abhängigkeit von einer (Anfangs-) Eigenschaft des Zellstapels gesteuert wird/werden. Hierbei ist die Eigenschaft des Zellstapels bevorzugt ausgewählt aus der Gruppe bestehend aus: Art, Größe, Form, Profil, insbesondere Kantenprofil, Material, Produkthistorie, insbesondere Betriebsdauer, Beschädigungen. Die geometrischen Eigenschaften können bspw. mittels einer optischen Erfassungseinheit (mittels Lasertriangulation erstellte Kantenprofile, von Kameras erfasste graustufen- oder Farbbilder, etc.) ermittelt werden. Die Materialeigenschaften und Produkthistorie können bspw. aus Datenbanken ermittelt bzw. abgerufen werden.

Vorteilhafterweise kann/können die Trenneinheit und/oder die Trennunterstützungseinheit in Abhängigkeit von der vorher ermittelten Trenneffektivität und/oder dem vorher ermittelten Beschädigungsrisiko der Trenneinheit und/oder des Zellstapels ausgewählt werden. Hierbei kann/können die Trenneinheit und/oder die Trennunterstützungseinheit bspw. bezüglich der Größe, Art oder Technologie ausgewählt werden.

Ferner ist es vorteilhaft, wenn eine Trenneffektivität des Schritts des Steuerns in Abhängigkeit von einer Änderung der erfassten physikalischen Größe ermittelt wird, insbesondere wobei anschließend im Schritt des Steuerns die Antriebseinheit und/oder die Trennunterstützungseinheit ferner in Abhängigkeit von der ermittelten Trenneffektivität gesteuert wird/werden.

Alternativ oder zusätzlich ist es vorteilhaft, wenn ein Beschädigungsrisiko der Trenneinheit und/oder des Zellstapels beim Trennen der Zelllagen in Abhängigkeit von einer Änderung der erfassten physikalischen Größe und/oder der ermittelten Trenneffektivität ermittelt wird, insbesondere wobei anschließend im Schritt des Steuerns die Antriebseinheit und/oder die Trennunterstützungseinheit in Abhängigkeit von dem ermittelten Beschädigungsrisiko gesteuert wird/werden.

Wird bspw. aufgrund einer zu hohen Kraft bzw. Gegenkraft, d.h. zu hoher benötigter Trennkräfte eine Ultraschallschwingung eingeleitet - was wiederum zu einem höheren Beschädigungsrisiko der Komponenten des Zellstapels und/oder einem höheren Verschleiß der Trenneinheit führen kann - so kann die Trenneffektivität dieser Maßnahme anhand einer sinkenden Änderung der Gegenkraft ermittelt werden.

Ist die Trenneffektivität zu gering bzw. sinkt die Gegenkraft nicht ausreichend oder ist das Beschädigungsrisiko unzulässig hoch, so können Frequenz oder Amplitude der Ultraschallschwingung entsprechend angepasst werden.

Den Erfolg oder Misserfolg der eingeleiteten Maßnahme bzw. der Prozessanpassung kann mittels eines lernenden Algorithmus dabei direkt gemessen werden.

Hierbei wird bevorzugt im Schritt des Steuerns der Trennvorgang mittels der Antriebseinheit abgebrochen, wenn ein Grenzwert für die erfasste physikalische Größe und/oder das ermittelte Beschädigungsrisiko und/oder die ermittelte Trenneffektivität erreicht oder überschritten oder unterschritten wird.

Vorteilhafterweise wird/werden die Trenneffektivität und/oder das Beschädigungsrisiko mittels der Steuereinheit oder einer externen Recheneinheit, insbesondere unter Verwendung künstlicher Intelligenz ermittelt. Hierbei kann/können die Trenneffektivität und/oder das Beschädigungsrisiko und damit das Trennverfahren im Hinblick auf Faktoren wie Kosten, Werkzeughaltbarkeit, Taktzeit etc. insbesondere mittels künstlicher Intelligenz entsprechend optimiert werden.

Erreicht werden kann dadurch:
- Eine längere Werkzeugstandzeit und damit verringerte Kosten durch seltener benötigte Ersatztrenneinheiten und weniger Austauschvorgänge.
- Verwendung von spezifischen Trenneinheiten, je nach "Härte" der Anwendung Nutzung von robusten Trenneinheiten nur dann, wenn erforderlich.
- Eine Anpassung des Beschädigungsrisikos der zu zerlegenden Komponenten, je nach künftigem Einsatzzweck (Wiederaufbereitung, Recycling, Verschrottung, etc.).
- Kürzere Prozesszeiten bei gleichbleibender (je nach Anforderung: sichere, robuste Trennung der Komponenten, Beschädigungsfreiheit, etc.).

Des Weiteren ist es vorteilhaft, wenn das Verfahren einen Schritt des Trennens der aneinanderhaftenden Zelllagen mittels der Trenneinheit umfasst. Hierbei kann die jeweils oberste Zelllage nach dem Trennvorgang bspw. mittels eines Sauggreifer an einem Roboter oder händisch abgenommen werden.

### Zeichnungen

Die Erfindung wird nachstehend anhand der beigefügten Zeichnungen beispielhaft näher erläutert. Es zeigen:
- Fig. 1: eine schematische Darstellung einer Zelllagentrennvorrichtung mit keilförmigen Trenneinheiten;
- Fig. 2: eine schematische Darstellung einer Zelllagentrennvorrichtung mit spreizbaren Trennschenkeln;
- Fig. 3: eine schematische Darstellung einer Zelllagentrennvorrichtung mit Drähten; und
- Fig. 4: ein Ablaufdiagramm eines Verfahrens zum Steuern einer Antriebseinheit und/oder einer Trennunterstützungseinheit zum Trennen von aneinanderhaftenden Zelllagen eines Zellstapels.

In der nachfolgenden Beschreibung vorteilhafter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

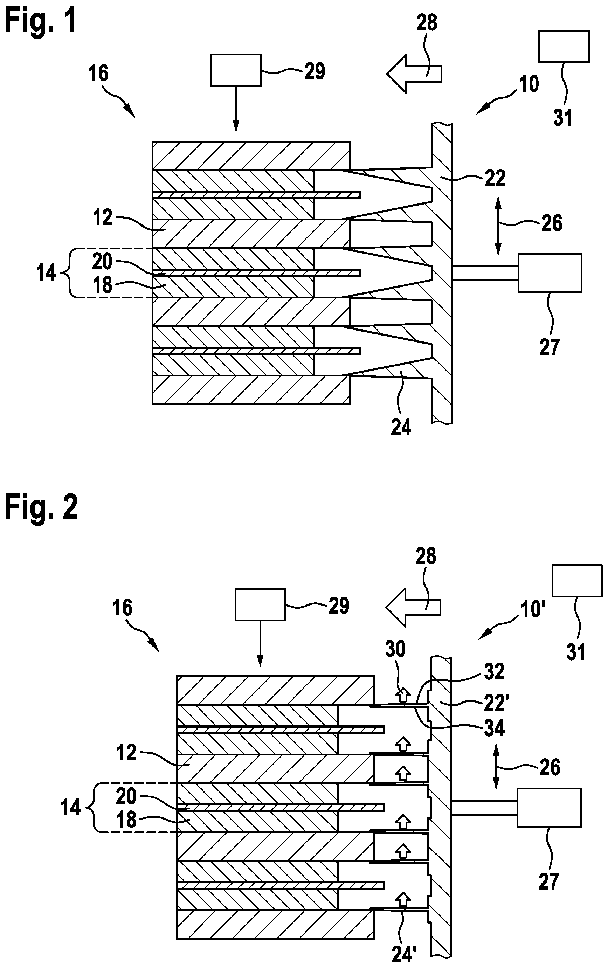

Fig. 1 bis Fig. 3 zeigen vorteilhafte Ausführungsbeispiele von Zelllagentrennvorrichtungen, welche in ihrer Gesamtheit mit der Bezugsziffer 10; 10'; 10" versehen sind.

Die Zelllagentrennvorrichtungen 10; 10'; 10" sind ausgebildet, eine Vielzahl von aneinanderhaftenden Zelllagen 12, 14 eines Zellstapels 16 einer (nicht dargestellten) Brennstoffzelle gleichzeitig voneinander zu trennen. Hierbei umfasst jede zu trennende Zelllage 12 eine Bipolarplatte 12 und jede Zelllage 14 eine Membran-Elektroden-Einheit 14. Die Membran-Elektroden-Einheiten 14 umfassen jeweils Gasdiffusionslagen (GDL) 18 und einen Dichtungsrahmen 20.

Die Zelllagentrennvorrichtungen 10; 10'; 10" weisen jeweils eine Halteeinheit 22; 22'; 22" auf. An der jeweiligen Halteeinheit 22; 22'; 22" ist jeweils eine Vielzahl Trenneinheiten 24; 24'; 24" vorgesehen, welche entlang einer Anordnungsrichtung 26 zueinander beabstandet angeordnet sind. Die Anordnungsrichtung 26 verläuft hierbei im Wesentlichen senkrecht zu der Ebene der zu trennenden Zelllagen 12, 14. Eine Antriebseinheit 27 ist ausgebildet die Trenneinheiten zwischen die aneinanderhaftenden Zelllagen 12, 14 des Zellstapels 16 zu führen. Die Trenneinheiten 24; 24'; 24" sind ausgebildet und dimensioniert, um gleichzeitig zwischen die zu trennenden aneinanderhaftenden Zelllagen 12, 14 entlang einer quer zu der Anordnungsrichtung 26 weisenden bestimmungsgemäßen Führrichtung 28 einführbar zu sein. Die bestimmungsgemäße Führrichtung 28 verläuft hierbei im Wesentlichen parallel zu der Ebene der zu trennenden Zelllagen 12, 14.

Die Zelllagentrennvorrichtungen 10; 10'; 10" weisen außerdem eine Trennunterstützungseinheit 29 auf. Die Trennunterstützungseinheit 29 ist ausgebildet Ultraschallschwingungen in den Zellstapel 16 einzubringen.

Erfindungsgemäß wird eine auf die Trenneinheiten 24 wirkenden Gegenkraft mittels einer (nicht gezeigten) Sensoreinheit erfasst, wobei die Antriebseinheit 27 und die Trennunterstützungseinheit 29 in Abhängigkeit von der erfassten Gegenkraft mittels einer Steuereinheit 31 gesteuert werden, um eine Trenneffektivität zu optimieren und/oder ein Beschädigungsrisiko der Trenneinheiten 24 und/oder des Zellstapels 16 zu reduzieren.

Fig. 1 zeigt ein erstes Ausführungsbeispiel der Zelllagentrennvorrichtung 10, wobei die Trenneinheiten 24 zum Trennen der Zelllagen 12, 14 keilförmig und in der bestimmungsgemäßen Führrichtung 28 spitz zulaufend ausgebildet sind.

Fig. 2 zeigt ein zweites Ausführungsbeispiel der Zelllagentrennvorrichtung 10', wobei die Trenneinheiten 24' zum Trennen der Zelllagen 12, 14 entlang einer Spreizrichtung 30 spreizbar ausgebildet sind. Hierbei weisen die Trenneinheiten 24' jeweils einen entlang der Spreizrichtung 30 spreizbaren Trennschenkel 32 und einen fixierten Trennschenkel 34 auf.

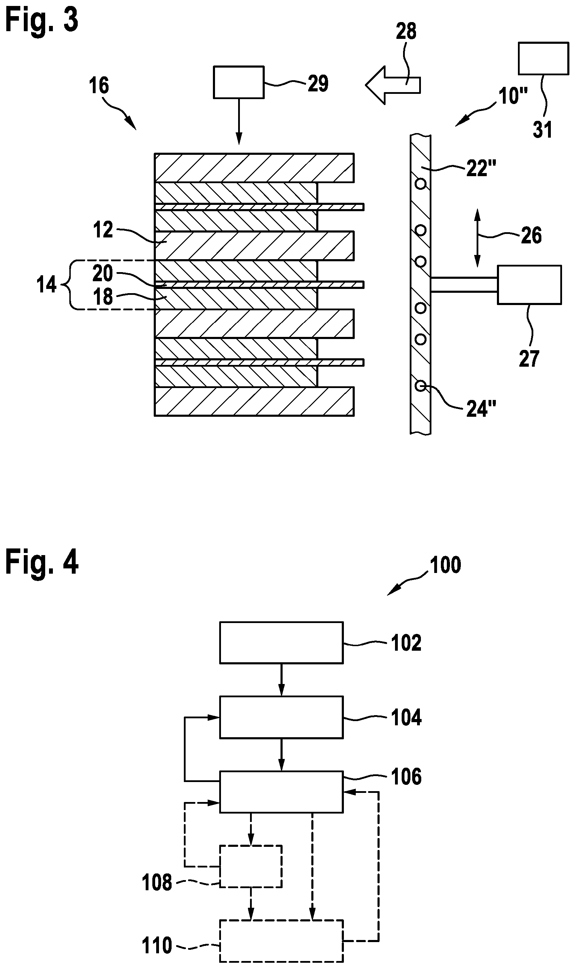

Fig. 3 zeigt ein drittes Ausführungsbeispiel der Zelllagentrennvorrichtung 10", wobei die Trenneinheiten 24" zum Trennen der Zelllagen 12, 14 als entlang der Anordnungsrichtung 26 parallel zueinander angeordnete Drähte 24" ausgebildet sind. Hierbei sind Halteinheit 22" derart ausgebildet und die Drähte 24" derart angeordnet und ausgebildet, dass die Zelllagentrennvorrichtung 10" zum Trennen der Zelllagen 12, 14 in der Führrichtung 28 von einer Seite des Zellstapels 16 bis zu einer gegenüberliegenden Seite des Zellstapels 16 führbar ist.

Fig. 4 zeigt ein Ablaufdiagramm eines Verfahrens 100 zum Steuern einer Antriebseinheit 27 und/oder einer Trennunterstützungseinheit 29 zum Trennen von aneinanderhaftenden Zelllagen 12, 14 eines in einer Aufnahmeeinheit aufgenommenen Zellstapels 16, insbesondere einer elektrochemischen Zelle, mittels einer Trenneinheit 24; 24'; 24". Das Verfahren 100 umfasst einen Schritt des Führens 102 der Trenneinheit 24; 24'; 24' zwischen die aneinanderhaftenden Zelllagen 12, 14 des Zellstapels 16 zum Trennen der Zelllagen 12, 14 mittels der Antriebseinheit 27. Das Verfahren 100 umfasst ferner einen Schritt des Erfassens 104 zumindest einer beim Schritt des Führens 102 aufgrund eines Einwirkens der Trenneinheit 24; 24'; 24" auf den Zellstapel 16 sich ändernden physikalischen Größe mittels einer Sensoreinheit. Das Verfahren 100 umfasst außerdem einen Schritt des Steuerns 106 der Antriebseinheit 27 und/oder einer Trennunterstützungseinheit 29 in Abhängigkeit von der zumindest einen erfassten physikalischen Größe mittels einer Steuereinheit 31, um den Trennvorgang zu optimieren.

Das Verfahren 100 umfasst des Weiteren einen optionalen Schritt des Ermittelns 108 einer Trenneffektivität des Schritts des Steuerns 106 in Abhängigkeit von einer Änderung der erfassten physikalischen Größe, insbesondere wobei anschließend im Schritt des Steuerns 106 die Antriebseinheit 27 und/oder die Trennunterstützungseinheit 29 ferner in Abhängigkeit von der ermittelten Trenneffektivität gesteuert wird/werden. Das Verfahren 100 umfasst ferner einen optionalen Schritt des Ermittelns 110 eines Beschädigungsrisikos der Trenneinheit 24; 24'; 24" und/oder des Zellstapels 16 beim Trennen der Zelllagen 12, 14 in Abhängigkeit von einer Änderung der erfassten physikalischen Größe und/oder der ermittelten Trenneffektivität, insbesondere wobei anschließend im Schritt des Steuerns 106 die Antriebseinheit 27 und/oder die Trennunterstützungseinheit 29 in Abhängigkeit von dem ermittelten Beschädigungsrisiko gesteuert wird/werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (100) zum Steuern einer Antriebseinheit (27) und/oder einer Trennunterstützungseinheit (29) zum Trennen von aneinanderhaftenden Zelllagen (12, 14) eines in einer Aufnahmeeinheit aufgenommenen Zellstapels (16), insbesondere einer elektrochemischen Zelle, mittels einer Trenneinheit (24; 24'; 24") mit den Schritten:
- Führen (102) der Trenneinheit (24; 24'; 24") zwischen die aneinanderhaftenden Zelllagen (12, 14) des Zellstapels (16) zum Trennen der Zelllagen (12, 14) mittels der Antriebseinheit (27);
- Erfassen (104) zumindest einer beim Schritt des Führens (102) aufgrund eines Einwirkens der Trenneinheit (24; 24'; 24") auf den Zellstapel (16) sich ändernden physikalischen Größe mittels einer Sensoreinheit; und
- Steuern (106) der Antriebseinheit (27) und/oder einer Trennunterstützungseinheit (29) in Abhängigkeit von der zumindest einen erfassten physikalischen Größe mittels einer Steuereinheit (31), um den Trennvorgang zu optimieren.

2. Verfahren (100) nach Anspruch 1, **dadurch gekennzeichnet, dass** die zumindest eine physikalische Größe der Trenneinheit (24; 24'; 24") und/oder dem Zellstapel (16) und/oder der Aufnahmeeinheit zugeordnet ist.

3. Verfahren (100) nach Anspruch 1 oder 2, **dadurch gekennzeichnet, dass** die zumindest eine physikalische Größe eine Eigenschaft und/oder eine Zustandsgröße und/oder eine Wirkgröße ist, welche auf die Trenneinheit und/oder den Zellstapel und/oder die Aufnahmeeinheit wirkt, insbesondere ausgewählt aus der Gruppe bestehend aus: Kraft, Frequenz, Länge, Geschwindigkeit, elektrischer Widerstand, oder Ableitungen daraus.

4. Verfahren (100) nach Anspruch 3, **dadurch gekennzeichnet, dass** die zumindest eine physikalische Größe
- eine Kraft, insbesondere einen Kraftbetrag und/oder eine Kraftrichtung, welche auf die Trenneinheit (24; 24'; 24") und/oder den Zellstapel (16) und/oder die Aufnahmeeinheit wirkt; und/oder
- eine Frequenz, insbesondere eine Schwingungsfrequenz und/oder ein Schwingungsfrequenzspektrum der Trenneinheit (24; 24'; 24") und/oder des Zellstapels (16) und/oder der Aufnahmeeinheit; und/oder
- eine Länge, insbesondere eine Verformung, der Trenneinheit (24; 24'; 24") und/oder des Zellstapels (16); und/oder
- eine Geschwindigkeit, insbesondere einen Geschwindigkeitsverlauf der Trenneinheit (24; 24'; 24"); und/oder
- einen elektrischen Widerstand, insbesondere einen elektrischen Durchgangswiderstand und/oder eine Impedanz des Zellstapels (16) in Stapelrichtung
umfasst.

5. Verfahren (100) nach einem der vorhergehenden Ansprüche, **dadurch gekennzeichnet, dass** die zumindest eine physikalische Größe an der Trenneinheit (24; 24'; 24") und/oder dem Zellstapel (16) und/oder Aufnahmeeinheit, insbesondere mittels einer optischen Sensoreinheit erfasst wird.

6. Verfahren (100) nach einem der vorhergehenden Ansprüche, **dadurch gekennzeichnet, dass** im Schritt des Steuerns (106) die Antriebseinheit (27) und/oder die Trennunterstützungseinheit (29) ferner in Abhängigkeit von einer Relativposition der Trenneinheit (24; 24'; 24") zu dem Zellstapel gesteuert wird/werden.

7. Verfahren (100) nach einem der vorhergehenden Ansprüche, **dadurch gekennzeichnet, dass** im Schritt des Erfassens (104) die physikalische Größe
- bei einer Eintauchphase des Führens (102) der Trenneinheit (24; 24'; 24") in den Zellstapel (16); und/oder
- während einer Bewegungsphase des Führens (102) der Trenneinheit (24; 24'; 24") durch den Zellstapel (16); und/oder
- während einer Spreizphase des Führens (102) der Trenneinheit (24; 24'; 24") im Zellstapel (16)
ermittelt wird/werden, wobei im Schritt des Steuerns (106) die Antriebseinheit (27) und/oder die Trennunterstützungseinheit (29) ferner in Abhängigkeit von der jeweiligen Phase des Führens (102) gesteuert wird/werden.

8. Verfahren (100) nach einem der vorhergehenden Ansprüche, **dadurch gekennzeichnet, dass** im Schritt des Steuerns (106) mittels der Antriebseinheit (27) eine Bewegungsgeschwindigkeit und/oder eine Bewegungsrichtung und/oder eine Orientierung der Trenneinheit (24; 24'; 24") eingestellt wird/werden.

9. Verfahren (100) nach einem der vorhergehenden Ansprüche, **dadurch gekennzeichnet, dass** im Schritt des Steuerns (106) mittels der Trennunterstützungseinheit (29)
- Ultraschallschwingungen; und/oder
- ein Schmiermedium; und/oder
- Wärme oder Kälte
in den Zellstapel (16) eingebracht wird/werden.

10. Verfahren (100) nach einem der vorhergehenden Ansprüche, **dadurch gekennzeichnet, dass** im Schritt des Steuerns (106) die Antriebseinheit (27) und/oder die Trennunterstützungseinheit (29) ferner in Abhängigkeit von einer Eigenschaft der Trenneinheit (24; 24'; 24") gesteuert wird/werden, welche insbesondere ausgewählt ist aus der Gruppe bestehend aus: Art, Größe, Form, Material.

11. Verfahren (100) nach einem der vorhergehenden Ansprüche, **dadurch gekennzeichnet, dass** im Schritt des Steuerns (106) die Antriebseinheit (27) und/oder die Trennunterstützungseinheit (29) ferner in Abhängigkeit von einer Eigenschaft des Zellstapels (16) gesteuert wird/werden, welche insbesondere ausgewählt ist aus der Gruppe bestehend aus: Art, Größe, Form, Profil, insbesondere Kantenprofil, Material, Produkthistorie, insbesondere Betriebsdauer, Beschädigungen.

12. Verfahren (100) nach einem der vorhergehenden Ansprüche, **gekennzeichnet durch** einen Schritt des Ermittelns (108) einer Trenneffektivität des Schritts des Steuerns (106) in Abhängigkeit von einer Änderung der erfassten physikalischen Größe, insbesondere wobei anschließend im Schritt des Steuerns (106) die Antriebseinheit (27) und/oder die Trennunterstützungseinheit (29) ferner in Abhängigkeit von der ermittelten Trenneffektivität gesteuert wird/werden.

13. Verfahren (100) nach einem der vorhergehenden Ansprüche, **gekennzeichnet durch** einen Schritt des Ermittelns (110) eines Beschädigungsrisikos der Trenneinheit (24; 24'; 24") und/oder des Zellstapels (16) beim Trennen der Zelllagen (12, 14) in Abhängigkeit von einer Änderung der erfassten physikalischen Größe und/oder der ermittelten Trenneffektivität, insbesondere wobei anschließend im Schritt des Steuerns (106) die Antriebseinheit (27) und/oder die Trennunterstützungseinheit (29) in Abhängigkeit von dem ermittelten Beschädigungsrisiko gesteuert wird/werden.

14. Verfahren (100) nach Anspruch 9 oder 10, **dadurch gekennzeichnet, dass** die Trenneffektivität und/oder das Beschädigungsrisiko mittels der Steuereinheit (31) oder einer externen Recheneinheit, insbesondere unter Verwendung künstlicher Intelligenz ermittelt wird/werden.

15. Verfahren (100) nach einem der Ansprüche 9 bis 11, **dadurch gekennzeichnet, dass** die Trenneinheit (24; 24'; 24") und/oder die Trennunterstützungseinheit (29) in Abhängigkeit von der vorher ermittelten Trenneffektivität und/oder dem vorher ermittelten Beschädigungsrisiko der Trenneinheit (24; 24'; 24") und/oder des Zellstapels (16) ausgewählt wird.

16. Verfahren (100) nach einem der vorhergehenden Ansprüche, **dadurch gekennzeichnet, dass** im Schritt des Steuerns (106) der Trennvorgang mittels der Antriebseinheit (27) abgebrochen wird, wenn ein Grenzwert für die erfasste physikalische Größe und/oder das ermittelte Beschädigungsrisiko und/oder die ermittelte Trenneffektivität erreicht oder überschritten oder unterschritten wird.

17. Verfahren (100) nach einem der vorhergehenden Ansprüche, **gekennzeichnet durch** einen Schritt des Trennens der aneinanderhaftenden Zelllagen (12, 14) mittels der Trenneinheit (24; 24'; 24").

18. Verfahren (100) nach einem der vorhergehenden Ansprüche, **dadurch gekennzeichnet, dass** die Trenneinheit (24; 24'; 24") zum Trennen der Zelllagen (12, 14)
- keilförmig und/oder spitzförmig und in einer bestimmungsgemäßen Führrichtung (28) spitz zulaufend ausgebildet ist; oder
- entlang einer Spreizrichtung (26) spreizbar, und insbesondere jeweils einen entlang der Spreizrichtung (26) spreizbaren Trennschenkel (32) aufweist, oder
- drahtförmig oder faserförmig ausgebildet ist, und insbesondere als zu einer Zelllagenebene der Zelllagen parallel ausgerichteter Draht (24") oder Faden ausgebildet ist.

19. Steuereinheit (31), die eingerichtet ist, folgende Schritte auszuführen:
- Empfangen von Sensordaten einer Sensoreinheit, wobei die Sensordaten zumindest eine bei einem Führen (102) einer Trenneinheit (24; 24'; 24") mittels einer Antriebseinheit (27) zwischen aneinanderhaftende Zelllagen (12, 14) eines Zellstapels (16), insbesondere einer elektrochemischen Zelle, aufgrund eines Einwirkens einer Trenneinheit (24; 24'; 24") auf den Zellstapel (16) sich ändernde physikalische Größe repräsentieren; und
- Ausgeben eines Steuersignal an die Antriebseinheit (27) und/oder eine Trennunterstützungseinheit (29) in Abhängigkeit von den empfangenen Sensordaten, um den Trennvorgang zu optimieren.

20. Zelllagentrennvorrichtung (10; 10'; 10") zum Trennen von aneinanderhaftenden Zelllagen (12, 14) eines in einer Aufnahmeeinheit aufgenommenen Zellstapels (16), insbesondere einer elektrochemischen Zelle, mit
- zumindest einer Trenneinheit (24; 24'; 24") zum Trennen der Zelllagen (12, 14);
- einer Antriebseinheit zum Führen der zumindest einen Trenneinheit (24; 24'; 24") zwischen die aneinanderhaftenden Zelllagen (12, 14) des Zellstapels (16) zum Trennen der Zelllagen (12, 14);
- gegebenenfalls einer Trennunterstützungseinheit (29) zum Einbringen von Ultraschallschwingungen und/oder eines Schmiermediums und/oder Wärme oder Kälte in den Zellstapel (16);
- einer Sensoreinheit zum Erfassen zumindest einer beim Schritt des Führens (102) aufgrund eines Einwirkens der Trenneinheit (24; 24'; 24") auf den Zellstapel (16) sich ändernden physikalischen Größe; und
- einer Steuereinheit nach Anspruch 19.

## Claims

1. Method (100) for controlling a drive unit (27) and/or a separation support unit (29) for separating, by means of a separation unit (24; 24'; 24"), adhering cell layers (12, 14) of a cell stack (16), in particular of an electrochemical cell, which cell stack is received in a receiving unit, said method comprising the following steps:
- using the drive unit (27) to guide (102) the separation unit (24; 24'; 24") between the adhering cell layers (12, 14) of the cell stack (16) in order to separate the cell layers (12, 14);
- using a sensor unit to capture (104) at least one physical variable that changes during the guiding step (102) due to an action of the separation unit (24; 24'; 24") on the cell stack (16); and
- using a control unit (31) to control (106) the drive unit (27) and/or a separation support unit (29) depending on the at least one captured physical variable in order to optimize the separation process.

2. Method (100) according to Claim 1, **characterized in that** the at least one physical variable is assigned to the separation unit (24; 24'; 24") and/or the cell stack (16) and/or the receiving unit.

3. Method (100) according to Claim 1 or 2, **characterized in that** the at least one physical variable is a property and/or a state variable and/or an active variable which acts on the separation unit and/or the cell stack and/or the receiving unit, in particular selected from the group consisting of: force, frequency, length, speed, electrical resistance, or derivatives thereof.

4. Method (100) according to Claim 3, **characterized in that** the at least one physical variable includes
- a force, in particular an amount of force and/or a direction of force acting on the separation unit (24; 24'; 24") and/or the cell stack (16) and/or the receiving unit; and/or
- a frequency, in particular a vibration frequency and/or a vibration frequency spectrum of the separation unit (24; 24'; 24") and/or the cell stack (16) and/or the receiving unit; and/or
- a length, in particular a deformation, of the separation unit (24; 24'; 24") and/or the cell stack (16); and/or
- a speed, in particular a speed curve, of the separation unit (24; 24'; 24"); and/or
- an electrical resistance, in particular an electrical contact resistance, and/or an impedance of the cell stack (16) in the direction of the stack.

5. Method (100) according to any one of the preceding claims, **characterized in that** the at least one physical variable is captured at the separation unit (24; 24'; 24") and/or the cell stack (16) and/or receiving unit, in particular by means of an optical sensor unit.

6. Method (100) according to any one of the preceding claims, **characterized in that**, in the control step (106), the drive unit (27) and/or the separation support unit (29) is/are also controlled depending on a relative position of the separation unit (24; 24'; 24") to the cell stack.

7. Method (100) according to any one of the preceding claims, **characterized in that**, in the capture step (104), the physical variable is determined
- during an immersion phase of the guiding (102) of the separation unit (24; 24'; 24") into the cell stack (16); and/or
- during a movement phase of the guiding (102) of the separation unit (24; 24'; 24") through the cell stack (16); and/or
- during a spreading phase of the guiding (102) of the separation unit (24; 24'; 24") in the cell stack (16),
wherein, in the control step (106), the drive unit (27) and/or the separation support unit (29) is/are also controlled depending on the respective phase of the guiding (102).

8. Method (100) according to any one of the preceding claims, **characterized in that**, in the control step (106), a movement speed and/or a direction of movement and/or an orientation of the separation unit (24; 24'; 24") is/are set by means of the drive unit (27).

9. Method (100) according to any one of the preceding claims, **characterized in that**, in the control step (106), the separation support unit (29) is used to introduce
- ultrasonic vibrations; and/or
- a lubricating medium; and/or
- heat or cold
into the cell stack (16).

10. Method (100) according to any one of the preceding claims, **characterized in that**, in the control step (106), the drive unit (27) and/or the separation support unit (29) is/are also controlled depending on a property of the separation unit (24; 24'; 24") selected in particular from the group consisting of: type, size, shape, material.

11. Method (100) according to any one of the preceding claims, **characterized in that**, in the control step (106), the drive unit (27) and/or the separation support unit (29) is/are also controlled depending on a property of the cell stack (16) selected in particular from the group consisting of: type, size, shape, profile, in particular edge profile, material, product history, in particular service life, damage.

12. Method (100) according to any one of the preceding claims, **characterized by** a step of determining (108) a separation effectiveness of the control step (106) depending on a change in the physical variable captured, in particular wherein the drive unit (27) and/or the separation support unit (29) is/are also subsequently controlled in the control step (106) depending on the determined separation effectiveness.

13. Method (100) according to any one of the preceding claims, **characterized by** a step of determining (110) a risk of damage of the separation unit (24; 24'; 24") and/or the cell stack (16) when the cell layers (12, 14) are separated depending on a change in the captured physical variable and/or the determined separation effectiveness, in particular wherein the drive unit (27) and/or the separation support unit (29) is/are controlled subsequently in the control step (106) depending on the determined risk of damage.

14. Method (100) according to Claim 9 or 10, **characterized in that** the separation effectiveness and/or the risk of damage is/are determined by means of the control unit (31) or an external computing unit, in particular by using artificial intelligence.

15. Method (100) according to any one of Claims 9 to 11, **characterized in that** the separation unit (24; 24'; 24") and/or the separation support unit (29) is selected depending on the previously determined separation effectiveness and/or the previously determined risk of damage to the separation unit (24; 24'; 24") and/or the cell stack (16).

16. Method (100) according to any one of the preceding claims, **characterized in that**, in the control step (106), the separation process is interrupted by means of the drive unit (27) when a limit value for the captured physical variable and/or the determined risk of damage and/or the determined separation effectiveness is reached or exceeded or undershot.

17. Method (100) according to any one of the preceding claims, **characterized by** a step of separating the adhering cell layers (12, 14) by means of the separation unit (24; 24'; 24").

18. Method (100) according to any one of the preceding claims, **characterized in that**, in order to separate the cell layers (12, 14), the separation unit (24; 24'; 24")
- is wedge-shaped and/or pointed and tapered in a direction of guidance (28) in accordance with the intended purpose; or
- can be spread along a spreading direction (26), and in particular has a respective dividing leg (32) which can be spread along the spreading direction (26), or
- is wire-shaped or fibrous, and in particular is formed as a wire (24") or thread aligned parallel to a cell layer plane of the cell layers.

19. Control unit (31) configured to perform the following steps:
- receiving sensor data from a sensor unit, wherein the sensor data represent at least one physical variable that changes during the guiding (102) of a separation unit (24; 24'; 24") by means of a drive unit (27) between adhering cell layers (12, 14) of a cell stack (16), in particular an electrochemical cell, due to an action of a separation unit (24; 24'; 24") on the cell stack (16); and
- outputting a control signal to the drive unit (27) and/or a separation support unit (29) depending on the received sensor data in order to optimize the separation process.

20. Cell layer separation device (10; 10'; 10") for separating adhering cell layers (12, 14) of a cell stack (16) received in a receiving unit, in particular an electrochemical cell, having
- at least one separation unit (24; 24'; 24") for separating the cell layers (12, 14);
- a drive unit for guiding the at least one separation unit (24; 24'; 24") between the adhering cell layers (12, 14) of the cell stack (16) in order to separate the cell layers (12, 14);
- a separation support unit (29), if applicable, for introducing ultrasonic vibrations and/or a lubricating medium and/or heat or cold into the cell stack (16);
- a sensor unit for capturing at least one physical variable that changes during the guiding step (102) due to an action of the separation unit (24; 24'; 24") on the cell stack (16); and
- a control unit according to Claim 19.

## Revendications

1. Procédé (100) de commande d'une unité d'entraînement (27) et/ou d'une unité d'aide à la séparation (29) destinée à séparer des couches de cellules (12, 14) adhérant les unes aux autres d'un empilement de cellules (16) reçu dans une unité de réception, en particulier d'une cellule électrochimique, au moyen d'une unité de séparation (24 ; 24' ; 24"), avec les étapes de :
- guidage (102) de l'unité de séparation (24 ; 24' ; 24") entre les couches de cellules (12, 14) adhérant les unes aux autres de l'empilement de cellules (16) pour séparer les couches de cellules (12, 14) au moyen de l'unité d'entraînement (27) ;
- détection (104) d'au moins une grandeur physique qui varie dans l'étape du guidage (102) en raison d'une action de l'unité de séparation (24 ; 24' ; 24") sur l'empilement de cellules (16) au moyen d'une unité de détection ; et
- commande (106) de l'unité d'entraînement (27) et/ou d'une unité d'aide à la séparation (29) en fonction de l'au moins une grandeur physique détectée au moyen d'une unité de commande (31) pour optimiser le processus de séparation.

2. Procédé (100) selon la revendication 1, **caractérisé en ce que** l'au moins une grandeur physique est associée à l'unité de séparation (24 ; 24' ; 24") et/ou à l'empilement de cellules (16) et/ou à l'unité de réception.

3. Procédé (100) selon la revendication 1 ou 2, **caractérisé en ce que** l'au moins une grandeur physique est une propriété et/ou une grandeur d'état et/ou une grandeur active, qui agit sur l'unité de séparation et/ou l'empilement de cellules et/ou l'unité de réception, choisie en particulier dans le groupe comprenant : force, fréquence, longueur, vitesse, résistance électrique, ou des dérivées de celles-ci.

4. Procédé (100) selon la revendication 3, **caractérisé en ce que** l'au moins une grandeur physique comprend
- une force, en particulier une valeur de force et/ou une direction de force, qui agit sur l'unité de séparation (24 ; 24' ; 24') et/ou l'empilement de cellules (16) et/ou l'unité de réception ; et/ou
- une fréquence, en particulier une fréquence de vibration et/ou un spectre de fréquences de vibration de l'unité de séparation (24 ; 24' ; 24") et/ou de l'empilement de cellules (16) et/ou de l'unité de réception ; et/ou
- une longueur, en particulier une déformation, de l'unité de séparation (24 ; 24' ; 24') et/ou de l'empilement de cellules (16) ; et/ou
- une vitesse, en particulier une courbe de vitesse de l'unité de séparation (24 ; 24' ; 24") ; et/ou
- une résistance électrique, en particulier une résistance électrique de passage et/ou une impédance de l'empilement de cellules (16) dans la direction de l'empilement

5. Procédé (100) selon l'une des revendications précédentes, **caractérisé en ce que** l'au moins une grandeur physique est détectée sur l'unité de séparation (24 ; 24' ; 24") et/ou sur l'empilement de cellules (16) et/ou sur l'unité de réception, en particulier au moyen d'une unité de détection optique.

6. Procédé (100) selon l'une des revendications précédentes, **caractérisé en ce que**, dans l'étape de la commande (106), l'unité d'entraînement (27) et/ou l'unité d'aide à la séparation (29) est commandée/sont commandées en outre en fonction d'une position relative de l'unité de séparation (24 ; 24' ; 24") par rapport à l'empilement de cellules.

7. Procédé (100) selon l'une des revendications précédentes, **caractérisé en ce que**, dans l'étape de la détection (104), la grandeur physique est déterminée
- dans une phase d'immersion du guidage (102) de l'unité de séparation (24 ; 24' ; 24") dans l'empilement de cellules (16) ; et/ou
- pendant une phase de déplacement du guidage (102) de l'unité de séparation (24 ; 24' ; 24") à travers l'empilement de cellules (16) ; et/ou
- pendant une phase d'écartement du guidage (102) de l'unité de séparation (24 ; 24' ; 24") dans l'empilement de cellules (16)
l'unité d'entraînement (27) et/ou l'unité d'aide à la séparation (29) étant commandée/étant commandées, dans l'étape de la commande (106), en outre en fonction de la phase respective du guidage (102).

8. Procédé (100) selon l'une des revendications précédentes, **caractérisé en ce que**, dans l'étape de la commande (106), une vitesse de déplacement et/ou une direction de déplacement et/ou une orientation de l'unité de séparation (24 ; 24' ; 24") est réglée/sont réglées au moyen de l'unité d'entraînement (27).

9. Procédé (100) selon l'une des revendications précédentes, **caractérisé en ce qu'**est introduit(e)/sont introduit(es)s, dans l'étape de la commande (106), au moyen de l'unité d'aide à la séparation (29)
- des vibrations ultrasonores ; et/ou
- un lubrifiant ; et/ou
- de la chaleur ou du froid
dans l'empilement de cellules (16).

10. Procédé (100) selon l'une des revendications précédentes, **caractérisé en ce que**, dans l'étape de la commande (106), l'unité d'entraînement (27) et/ou l'unité d'aide à la séparation (29) est commandée/sont commandées en outre en fonction d'une caractéristique de l'unité de séparation (24 ; 24' ; 24"), qui est choisie en particulier dans le groupe comprenant : type, taille, forme, matériau.

11. Procédé (100) selon l'une des revendications précédentes, **caractérisé en ce que**, dans l'étape de la commande (106), l'unité d'entraînement (27) et/ou l'unité d'aide à la séparation (29) est commandée/sont commandées en outre en fonction d'une propriété de l'empilement de cellules (16), qui est choisie en particulier dans le groupe comprenant : type, taille, forme, profil, en particulier profil de bord, matériau, historique du produit, en particulier durée de fonctionnement, dommages.

12. Procédé (100) selon l'une des revendications précédentes, **caractérisé par** une étape de détermination (108) d'une efficacité de séparation de l'étape de commande (106) en fonction d'une modification de la grandeur physique détectée, l'unité d'entraînement (27) et/ou l'unité d'aide à la séparation (29) étant commandée/commandées directement après, dans l'étape de la commande (106), en outre en fonction de l'efficacité de séparation déterminée.

13. Procédé (100) selon l'une des revendications précédentes, **caractérisé par** une étape de détermination (110) d'un risque d'endommagement de l'unité de séparation (24 ; 24' ; 24") et/ou de l'empilement de cellules (16) lors de la séparation des couches de cellules (12, 14) en fonction d'une modification de la grandeur physique détectée et/ou de l'efficacité de séparation déterminée, l'unité d'entraînement (27) et/ou l'unité d'aide à la séparation (29) étant commandée/commandées directement après, dans l'étape de la commande (106), en fonction du risque d'endommagement déterminé.

14. Procédé (100) selon les revendications 9 ou 10, **caractérisé en ce que** l'efficacité de séparation et/ou le risque d'endommagement est déterminé(e)/sont déterminés au moyen de l'unité de commande (31) ou d'une unité de calcul externe, en particulier en utilisant l'intelligence artificielle.

15. Procédé (100) selon l'une des revendications 9 à 11, **caractérisé en ce que** l'unité de séparation (24 ; 24' ; 24") et/ou l'unité d'aide à la séparation (29) sont choisies en fonction de l'efficacité de séparation déterminée au préalable et/ou du risque d'endommagement déterminé au préalable de l'unité de séparation (24 ; 24' ; 24") et/ou de l'empilement de cellules (16).

16. Procédé (100) selon l'une des revendications précédentes, **caractérisé en ce que**, dans l'étape de la commande (106), le processus de séparation est interrompu au moyen de l'unité d'entraînement (27) lorsqu'une valeur limite pour la grandeur physique détectée et/ou le risque d'endommagement déterminé et/ou l'efficacité de séparation déterminée est atteinte ou dépassée ou non dépassée.

17. Procédé (100) selon l'une des revendications précédentes, **caractérisé par** une étape de la séparation des couches de cellules (12, 14) adhérant les unes aux autres au moyen de l'unité de séparation (24 ; 24' ; 24").

18. Procédé (100) selon l'une des revendications précédentes, **caractérisé en ce que** l'unité de séparation (24 ; 24' ; 24") destiné à séparer les couches de cellules (12, 14)
- présente une forme de coin et/ou de pointe et une forme se terminant en pointe dans une direction de guidage (28) conforme à l'usage prévu ; ou
- peut être écartée le long d'une direction d'écartement (26), et comporte, en particulier, respectivement une branche de séparation (32) pouvant être écartée le long de la direction d'écartement (26), ou
- présente une forme de fil métallique ou de fibre, et est formée en particulier comme un fil métallique (24") ou une fibre orienté(e) parallèlement à un plan de couche de cellules des couches de cellules.

19. Unité de commande (31), qui est mise au point pour exécuter des étapes suivantes :
- réception de données de capteur d'une unité de détection, les données de capteur représentant au moins une grandeur physique qui varie lors d'un guidage (102) d'une unité de séparation (24 ; 24' ; 24") au moyen d'une unité d'entraînement (27) entre des couches de cellules (12, 14) adhérant les unes aux autres d'un empilement de cellules (16), en particulier d'une cellule électrochimique, en raison d'une action d'une unité de séparation (24 ; 24' ; 24") sur l'empilement de cellules (16) ; et
- envoi d'un signal de commande à l'unité d'entraînement (27) et/ou à une unité d'aide à la séparation (29) en fonction des données de capteur reçues pour optimiser le processus de séparation.

20. Dispositif d'aide à la séparation (10 ; 10' ; 10") de couches de cellules destiné à séparer des couches de cellules (12, 14) adhérant les unes aux autres d'un empilement de cellules (16), en particulier d'une cellule électrochimique, avec
- au moins une unité de séparation (24 ; 24' ; 24") destinée à séparer les couches de cellules (12, 14) ;
- une unité d'entraînement destinée à guider l'au moins une unité de séparation (24 ; 24' ; 24") entre les couches de cellules (12, 14) adhérant les unes aux autres de l'empilement de cellules (16) pour séparer les couches de cellules (12, 14) ;
- le cas échéant, une unité d'aide à la séparation (29) destinée à introduire des vibrations ultrasonores et/ou un lubrifiant et/ou de la chaleur ou du froid dans l'empilement de cellules (16) ;
- une unité de détection destinée à détecter au moins une grandeur physique qui varie dans l'étape du guidage (102) en raison de l'action de l'unité de séparation (24 ; 24' ; 24") sur l'empilement de cellules (16) ; et
- une unité de commande selon la revendication 19.
